# EUROPEAN PATENT APPLICATION

(11) **EP 3 817 310 A1**
(43) Date of publication of application: **05.05.2021**
(21) Application number: 18927009.3
(22) Date of filing: 20.09.2018
(51) Int. Cl.: H04L 12/801

(54) **BURST TRAFFIC ALLOCATION METHOD AND APPARATUS, AND PROXY SERVER**

(30) Priority: 20.07.2018 CN 201810806465
(71) Applicant: Wangsu Science & Technology Co., Ltd., Shanghai 200030 (CN)
(72) Inventor: CHEN, Weicai, Shanghai 200030 (CN)
(74) Representative: de Arpe Fernandez, Manuel
(86) International application number: PCT/CN2018/106640
(87) International publication number: WO 2020/015154

(57) **Abstract**

The present disclosure describes a bursty traffic allocation method, device and proxy server. The method includes: receiving statistical data sent by a proxy server deployed in a service node, where the statistical data is used to characterize an operating state of the service node and/or one or more physical machines in the service node; determining whether there is a bursty condition in a target service, and if there is a bursty condition in the target service, generating a resource scheduling task matching the service node based on the statistical data; feeding back the resource scheduling task to the proxy server, to allow the proxy server to expand a physical machine in the service node according to a resource amount specified in the resource scheduling task; and receiving a resource expansion message fed back by the proxy server for the resource scheduling task, and pulling bursty traffic of the target service to a physical machine specified in the resource expansion message. The technical solutions provided by the present disclosure may make full use of the resources in the network, thereby improving the efficiency in handling bursty traffic.

## Description

### FIELD OF DISCLOSURE

The application relates to the field of internet technology, more particularly, relates to a bursty traffic allocation method, device and proxy server.

### BACKGROUND

With the continuous development of internet technology, there are more and more services in the network. Different services generally have different characteristics. At certain time nodes, bursty traffic growths may occur in the services. For instance, events such as popular game going online or patch launching, starting of shopping platform promotions, and updating of popular videos may all trigger traffic growths.

In order to solve the problem of decreased network quality caused by the bursty traffic growths, current network operators often allocate a certain amount of redundant resources to the services that bursty traffic happened frequently, to deal with the problem of likely traffic growths. However, these redundant resources remain idle for most of the time, resulting in an excessive waste of the resources. It is apparent that the current technical solutions for handling traffic bursts may waste a significant amount of resources, resulting in a low efficiency for the solutions.

### BRIEF SUMMARY OF THE DISCLOSURE

The objective of the present disclosure is to provide a bursty traffic allocation method, device and proxy server, which may make full use of the resources in the network, thereby improving the efficiency in handling bursty traffic.

To achieve the above objective, in one aspect, the present disclosure provides a bursty traffic allocation method. The method includes: receiving statistical data sent by a proxy server deployed in a service node, where the statistical data is used to characterize an operating state of the service node and/or one or more physical machines in the service node; determining whether there is a bursty condition in a target service, and if there is a bursty condition in the target service, generating a resource scheduling task matching the service node based on the statistical data; feeding back the resource scheduling task to the proxy server, to allow the proxy server to expand a physical machine in the service node according to a resource amount specified in the resource scheduling task; and receiving a resource expansion message fed back by the proxy server for the resource scheduling task, and pulling bursty traffic of the target service to a physical machine specified in the resource expansion message.

To achieve the above objective, in another aspect, the present disclosure further provides a bursty traffic allocation device. The device includes a data analysis unit, a scheduling decision unit, and a strategy issuing unit, where: the data analysis unit is configured to receive statistical data sent by a proxy server deployed in a service node, where the statistical data is used to characterize an operating state of the service node and/or one or more physical machines in the service node, and determine whether there is a bursty condition in a target service; the scheduling decision unit is configured to, when there is a bursty condition in the target service, generate a resource scheduling task matching the service node based on the statistical data, and feed back the resource scheduling task to the proxy server, to allow the proxy server to expand a physical machine in the service node according to a resource amount specified in the resource scheduling task; and the strategy issuing unit is configured to receive a resource expansion message fed back by the proxy server for the resource scheduling task, generate a bandwidth pulling task according to the resource expansion message, and issue the bandwidth pulling task to a bandwidth pulling module, to allow the bandwidth pulling module to pull bursty traffic of the target service to a physical machine specified in the resource expansion message.

To achieve the above objective, in another aspect, the present disclosure further provides a bursty traffic allocation method. The method is applied to a proxy server, where the proxy server is deployed in a service node. The method includes: collecting, in real-time, statistical data of the service node and/or one or more physical machines in the service node, and sending the statistical data to a bursty traffic allocation device, where the statistical data is used to characterize an operating state of the service node and/or the one or more physical machines in the service node; receiving a resource scheduling task sent by the bursty traffic allocation device, where the resource scheduling task includes a to-be-expanded resource amount and an identity of a to-be-expanded physical machine; acquiring a target resource, at the to-be-expanded resource amount, from a redundant resources pool, initializing one or more target virtual machines in the to-be-expanded physical machine, and allocating the target resource to the one or more target virtual machines; and feeding back a resource expansion message to the bursty traffic allocation device, to allow the bursty traffic allocation device to pull bursty traffic of a target service to a physical machine in which the one or more target virtual machines are located, where the resource expansion message indicates that the target resource has been allocated to the one or more target virtual machines.

To achieve the above objective, in another aspect, the present disclosure further provides a proxy server. The proxy server includes a memory and a processor. The memory is configured to store computer programs that, when executed by the processor, implement the above-described methods.

As can be seen from the above, in the technical solutions provided by the present disclosure, a proxy server may be deployed in each service node. The proxy node may communicate with a bursty traffic allocation device. The proxy server may collect, in real time, statistical data of the service node and each physical machine in the service node. The statistical data may include, for example, bandwidth data, machine load, CPU usage data, memory usage data, etc. The statistical data may be fed back to the bursty traffic allocation device by the proxy server. The bursty traffic allocation device may include a data analysis unit, a scheduling decision unit, and a strategy issuing unit. Here, the data analysis unit may evaluate, based on the statistical data, whether the service node and the physical machine(s) are currently in a healthy operating state, and may assess the health level of the service node and the physical machine(s). Afterwards, the data analysis unit may further automatically analyze the current service quality of a target service, to determine, according to the service quality, whether there exists a bursty condition in the target service. Once there exists a bursty condition in the target service, the scheduling decision unit may generate a resource scheduling task matching the service node according to the severity of the bursty condition and the health level of the service node and the physical machine(s). The resource scheduling task may be used to expand the service node, to allow the service node to have a capacity to handle the bursty service traffic. The resource scheduling task may be issued to the proxy server. Responsive to the resource scheduling task, the proxy server may obtain a certain amount of target resource from the redundant resources pool, initialize target virtual machine(s) on a to-be-expanded physical machine in the service node, and at the same time, may allocate the target resource to the target virtual machine(s). After the proxy server has deployed the target virtual machine(s) and allocated the corresponding target resource, the proxy server may feed back a resource expansion message to the bursty traffic allocation device, where the resource expansion message may indicate that the resource has been deployed. Thereafter, the bursty traffic allocation device may pull the bursty traffic of the target service, through a bandwidth pulling module, to a physical machine in which the target virtual machine(s) is located. The bursty service traffic may be then processed by the target virtual machine(s) subsequently. Further, the above redundant resources pool may be shared by a plurality of service nodes, and multiple services operating in the plurality of service nodes may have bursty conditions occurred alternatively in time, which results in a small resource amount required in the redundant resources pool. In addition, the redundant resources may consistently play a role in handling bursty traffic at different time nodes, thereby improving the utilization rate of the redundant resources. As can be seen from the above, when a service has a bursty condition, through the real-time communication between a proxy server and the bursty traffic allocation device, the capacity of a service node may be expanded in time to deal with the bursty service traffic. This may make full use of the resources in the network, thereby improving the efficiency in handling bursty traffic.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a bursty traffic allocation method according to some embodiments of the present disclosure;
FIG. 2 is a schematic diagram of system architecture according to some embodiments of the present disclosure;
FIG. 3 is a flowchart of a bursty traffic allocation method on a proxy server side according to some embodiments of the present disclosure; and
FIG. 4 is a schematic structural diagram of a proxy server according to some embodiments of the present disclosure.

### DETAILED DESCRIPTION

To make the objective, technical solutions, and advantages of the present disclosure clearer, the implementations of the present disclosure will be made in detail hereinafter with reference to the accompanying drawings.

### Embodiment 1

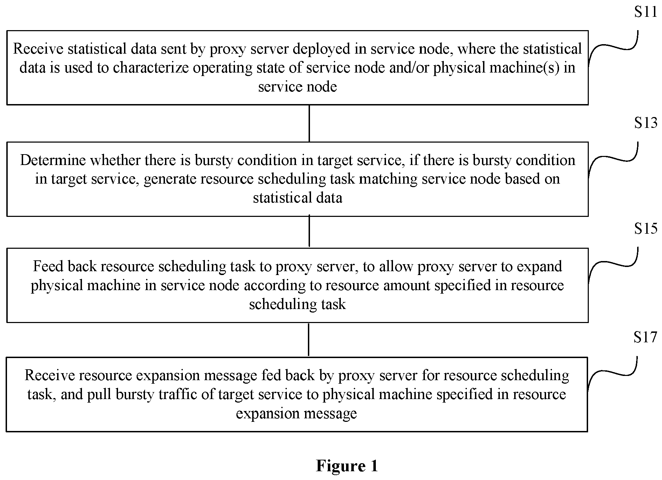

The present disclosure provides a bursty traffic allocation method. The execution entity of the method may be a bursty traffic allocation device. Referring to FIG. 1, the method may include the following steps.

S11: Receive statistical data sent by a proxy server deployed in a service node, where the statistical data is used to characterize an operating state of the service node and/or one or more physical machines in the service node.

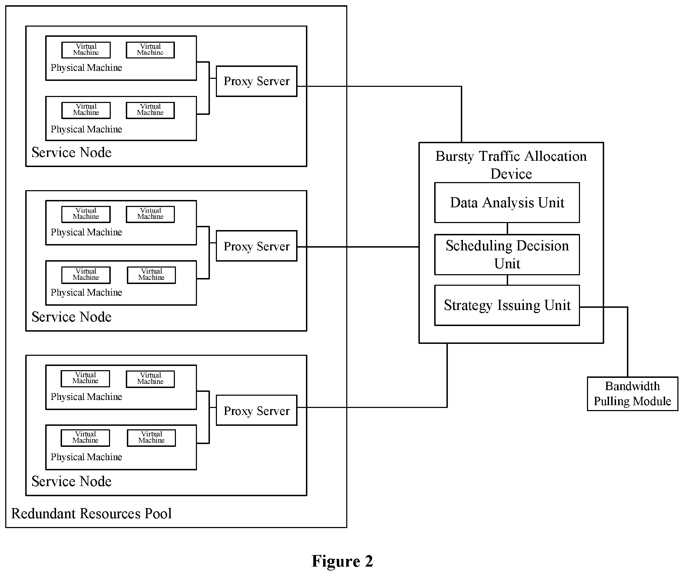

In the disclosed embodiment, the bursty traffic allocation device may be located in system architecture as shown in FIG. 2. In FIG. 2, a plurality of service nodes may share resources in a same redundant resources pool. Each service node may include one or more physical machines. At the same time, on each physical machine, one or more virtual machines may be deployed. Among these virtual machines, different virtual machines may process different services. In order to ensure the separation of resources between different services, a service processed in a virtual machine may be bound to a corresponding resource. For example, a service may be bound to a CPU resource. In this way, a service may be prevented from consuming other CPU resources, so as to prevent physical machine failures caused by the consumption of excessive resources by a same service.

In the disclosed embodiment, a proxy server may be deployed in a service node. The proxy server may communicate with the bursty traffic allocation device. The proxy server may collect statistical data of the service node and/or each physical machine in the service node. The statistical data may be used to characterize the operating state of the service node and/or the physical machine(s) in the service node. In real applications, the statistical data may include, for example, hardware metric data and bandwidth data of the physical machine(s) and current bandwidth data of the service node. Here, the hardware metric data may include, for example, the CPU usage data, memory usage data, physical machine load data, and so on. The current bandwidth data of a service node may be obtained by detecting the real-time bandwidth data generated by a switch associated with the service node.

In the disclosed embodiment, after collecting the statistical data, the proxy server may send the statistical data to the bursty traffic allocation device. As shown in FIG. 2, the bursty traffic allocation device may include a data analysis unit, a scheduling decision unit, and a strategy issuing unit. Here, the data analysis unit may receive the statistical data sent by the proxy server, and may determine, based on the statistical data, the current health level of the service node and the physical machine(s). In the disclosed embodiment, this health level may indicate the current load status and resource usage status of the service node and the physical machine(s). The higher the load and resource utilization rate, the lower the corresponding health level. In real applications, the health level of a physical machine may be determined by means of a predefined evaluation model. Specifically, the predefined evaluation model may be obtained by machine learning training of a large amount of statistical data of a physical machine. For example, statistical data for a physical machine at different health levels may be prepared in advance. The statistical data may be then input in turn into an initial evaluation model. The initial evaluation model may include a neural network. Accordingly, the neural network may be utilized to process the input data, and eventually output a processed result. The processed result may be a numerical value, the magnitude of which may denote a health level of the physical machine. Then, the health level denoted by the numerical value may be compared to the actual health level of the physical machine, to allow an error value to be determined. Next, the error value may be used to adjust the initial evaluation model. Through the continuous data input and adjustment processes, the evaluation model obtained through the training could be eventually allowed to accurately predict a health level of the physical machine according to the input statistical data. Accordingly, in the disclosed embodiment, the hardware metric data and the bandwidth data of a physical machine collected by the proxy server may be input into the trained predefined evaluation model, so that the result output by the predefined evaluation model may be used as a state parameter of the physical machine.

In addition, the health level of a service node may be also determined based on the bandwidth data of the service node. First, according to the bandwidth upper limit that a service node may host, three different health intervals may be classified. Specifically, a first determination ratio and a second determination ratio may be predefined according to the actual needs, where the first determination ratio is greater than the second determination ratio. Next, the multiplicative value of the bandwidth upper limit of the service node and the first determination ratio may be considered as the first determination threshold, and the multiplicative value of the bandwidth upper limit and the second determination ratio may be considered as the second determination threshold. In this way, through the first determination threshold and the second determination threshold, bandwidths of service nodes may be classified into three different intervals. The three different intervals have a one-to-one correspondence with the three different health intervals. Here, if the bandwidth value represented by the current bandwidth data of a service node is greater than the first determination threshold, it means that too much of the current bandwidth of the service node is occupied, so a parameter denoting an unhealthy level may be used as the state parameter of the service node. If the bandwidth value represented by the current bandwidth data of a service node is less than or equal to the first determination threshold but greater than the second determination threshold, it means that the bandwidth of the service node is heavily occupied, but there is a certain amount of capacity surplus, so a parameter denoting a sub-healthy level may be used as the state parameter of the service node at this point. If the bandwidth value represented by the current bandwidth data of a service node is less than or equal to the second determination threshold, it means that the current bandwidth of the service node is not consumed too much, so that a parameter denoting a healthy level may be used as the state parameter of the service node. Here, the parameters that denote various health levels may be predefined. For instance, -1 may be used as a parameter to denote an unhealthy level, 0 used as a parameter to denote a sub-healthy level, and 1 used as a parameter to denote a healthy level. It should be noted that in real applications, the above-described first and second determination ratios and the parameters that denote the health levels may be flexibly adjusted according to the needs.

In this way, through analyzing the statistical data sent by the proxy server, the data analysis unit may determine the health level of the service node, and also the health level of a physical machine in the service node.

S13: Determine whether there is a bursty condition in a target service, if there is a bursty condition in the target service, generate a resource scheduling task matching the service node based on the statistical data.

In the disclosed embodiment, the data analysis unit may also automatically analyze the service quality of each service currently in operation, and, according to the analyzed service quality, determine whether there is a possibility that a bursty condition exists in each service currently in operation. Specifically, taking a target service as an example, the data analysis unit may acquire the historical bandwidth data of the target service. The historical bandwidth data may include the amounts of bandwidth used by the target service at different time nodes. According to the historical bandwidth data, a bandwidth fluctuation curve of the target service may be fitted. The bandwidth fluctuation curve may directly exhibit the bandwidth peaks and the moments at which the bandwidth peaks occur. In that event, the bursty bandwidth threshold of the target service may be predicted based on the bandwidth fluctuation curve. For instance, each bandwidth peak may be extracted from the bandwidth fluctuation curve, then the average of these bandwidth peaks is considered as the bursty bandwidth threshold. Next, by comparing the current bandwidth data of the target service with the bursty bandwidth threshold, the corresponding service quality of the target service at present may be determined. The closer the current bandwidth data of the target service to the bursty bandwidth threshold, the worse the corresponding service quality of the target service at present, the more likely there is a bursty condition. Accordingly, if the bandwidth value indicated by the current bandwidth data of the target service is greater than or equal to the bursty bandwidth threshold, it may be determined that there is a bursty condition in the target service.

In the disclosed embodiment, after determining the existence of a bursty condition in the target service, to avoid traffic jams being introduced, more resources may be scheduled for use by the target service. Specifically, a resource scheduling task may be generated by the scheduling decision unit shown in FIG. 2.

In the disclosed implementation, the scheduling decision unit may first determine a resource amount that should be allocated to the target service according to the increased amount of bandwidth of the target service. For instance, the scheduling decision unit determines that there is a need to allocate an additional 10G amount of resources to the target service. Next, the scheduling decision unit needs to further determine which service node(s) or physical machine(s) should host this to-be-allocated resource amount. Specifically, the scheduling decision unit may determine, out of the to-be-allocated resource amount, a target resource amount allocated to a service node based on the state parameter of the service node determined at Step S11. Here, the worse the health level denoted by the state parameter, the smaller the target resource amount allocated to the service node. After determining the target resource amount allocated to the service node, according to the state parameter of the physical machines in the service node, the target resource amount may continue to be allocated among all the physical machines in the service node. Similarly, when allocating the target resource amount among the physical machines, the principle that the worse the health level of a physical machine the smaller the allocated resource amount may be also followed.

According to the above procedure, the scheduling decision unit may determine a resource amount that the service node and each physical machine in the service node should be allocated, so that a corresponding resource scheduling task may be generated according to the resource amount allocated to a physical machine.

S15: Feed back the resource scheduling task to the proxy server, to allow the proxy server to expand a physical machine in the service node according to a resource amount specified in the resource scheduling task.

In the disclosed implementation, after generating a resource scheduling task, the scheduling decision unit may send the resource scheduling task to the corresponding proxy server. After receiving the resource scheduling task sent by the scheduling decision unit, the proxy server may identify, from the resource scheduling task, the to-be-expanded resource amount and the identity of the to-be-expanded physical machine. Accordingly, the proxy server may acquire a resource at the to-be-expanded resource amount from the redundant resources pool, initialize target virtual machine(s) on the to-be-expanded physical machine, and allocate the acquired resource to the target virtual machine(s). In this way, the target virtual machine(s) then has the capacity to handle the bursty traffic.

In one embodiment, in order to ensure the separation of resources between different services, the service processed in the target virtual machine(s) may be bound to a corresponding resource. For example, the service processed in the target virtual machine(s) may be bound to a CPU resource. In this way, this service may be prevented from consuming other CPU resources, thereby preventing physical machine failures caused by the consumption of excessive resources by a same service.

In the disclosed embodiment, after the proxy server initializes the virtual machine(s) and allocates the corresponding resource to the initialized virtual machine(s), the proxy server may feed back a resource expansion message to the bursty traffic allocation device. The resource expansion message may indicate that the corresponding resource has been allocated to the target virtual machine(s).

S17: Receive the resource expansion message fed back by the proxy server for the resource scheduling task, and pull the bursty traffic of the target service to the physical machine specified in the resource expansion message.

In the disclosed embodiment, after receiving the resource expansion message sent by the proxy server, the scheduling decision unit in the bursty traffic allocation device may identify the virtual machine(s) that has successfully completed the resource deployment. Accordingly, the scheduling decision unit may generate a bandwidth pulling task based on the resource expansion message, where the bandwidth pulling task may include a to-be-pulled bandwidth amount and a physical machine corresponding to the to-be-pulled bandwidth amount. Here, the to-be-pulled bandwidth amount may be determined based on the resource amount(s) allocated to the virtual machine(s) in a physical machine. For instance, the resource amounts allocated to the one or more virtual machines in a physical machine may be aggregated, and the aggregated value may be used as the value for the to-be-pulled bandwidth amount. The generated bandwidth pulling task may be issued to a bandwidth pulling module by the scheduling decision unit, to allow the bandwidth pulling module to pull the bursty traffic of the target service into the physical machine specified in the resource expansion message.

In the disclosed embodiment, if the proxy server is unable to allocate the resource to the initialized virtual machine(s), the resource scheduling task may not be able to be completed. At this point, the proxy server may feed back a notification message of expansion failure to the bursty traffic allocation device. Assuming the virtual machine(s) to which the resource cannot be allocated is the target virtual machine(s), the remaining resources in the physical machine in which the target virtual machine(s) is located may be allocated to the target virtual machine(s). Specifically, the scheduling decision unit in the bursty traffic allocation device may determine, according to the previously received statistical data, whether there are remaining resources in the physical machine in which the target virtual machine(s) is located. If there are remaining resources and the resource amount of the remaining resources reaches the to-be-expanded resource amount of the target virtual machine(s), the scheduling decision unit may regenerate a resource scheduling task directed towards the target virtual machine(s). Here, the regenerated resource scheduling task may be used to expand the target virtual machine(s) by using the remaining resources in the physical machine in which the target virtual machine(s) is located. In this way, the regenerated resource scheduling task may be issued to the proxy server. Based on the re-issued resource scheduling task, the proxy server may allocate the remaining resources in the physical machine in which the target virtual machine(s) is located to the target virtual machine(s), thereby completing the resource deployment.

In one embodiment, if the resource amount of the remaining resources in the physical machine in which the target virtual machine(s) is located is less than the to-be-expanded resource amount of the target virtual machine(s), the scheduling decision unit may then redetermine a target physical machine in the service node, where the resource amount of the current remaining resources in the target physical machine is greater than or equal to the to-be-expanded resource amount of the target virtual machine(s). In this way, the bursty traffic that the target virtual machine(s) would otherwise need to handle may be forwarded to the target physical machine for processing. Specifically, the scheduling decision unit may generate a new resource scheduling task for the target physical machine, where the new resource scheduling task may be used to create virtual machine(s) in the target physical machine, and the resource amount adopted by the created virtual machine(s) may reach the to-be-expanded resource amount of the target virtual machine(s). In this way, after receiving the new resource scheduling task, the proxy server may create the virtual machine(s) in the target physical machine and forward a service to be processed in the target virtual machine(s) to the created virtual machine(s) in the target physical machine, to allow the bursty traffic to be processed subsequently through the created virtual machine(s) in the target physical machine.

In one embodiment, when the bursty traffic of the target service is completed by the created target virtual machine(s), the proxy server may deactivate the target virtual machine(s) and release the target resource, so as to send back the target resource to the redundant resources pool. In this way, making full use of the resources may be achieved.

The present disclosure further provides a bursty traffic allocation device. Referring to FIG. 2, the device comprises a data analysis unit, a scheduling decision unit, and a strategy issuing unit, where:
the data analysis unit is configured to receive statistical data sent by a proxy server deployed in a service node, where the statistical data is used to characterize an operating state of the service node and/or one or more physical machines in the service node, and determine whether there is a bursty condition in a target service;
the scheduling decision unit is configured to, when there is a bursty condition in the target service, generate a resource scheduling task matching the service node based on the statistical data, and feed back the resource scheduling task to the proxy server, to allow the proxy server to expand a physical machine in the service node according to a resource amount specified in the resource scheduling task; and
the strategy issuing unit is configured to receive a resource expansion message fed back by the proxy server for the resource scheduling task, generate a bandwidth pulling task according to the resource expansion message, and issue the bandwidth pulling task to a bandwidth pulling module, to allow the bandwidth pulling module to pull bursty traffic of the target service to a physical machine specified in the resource expansion message.

The specific functions implemented by each unit of the bursty traffic allocation device may refer to the previous descriptions in the disclosed embodiments, details of which will not be repeated again here.

### Embodiment 2

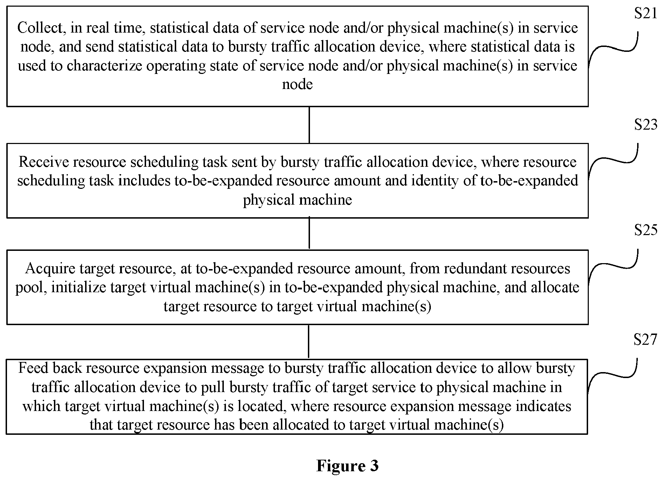

The present disclosure further provides a bursty traffic allocation method. The method may be applied to a proxy server. As described above, the proxy server is deployed in a service node. Referring to FIG. 3, the method includes the following steps.

S21: Collecting, in real time, statistical data of the service node and/or one or more physical machines in the service node, and sending the statistical data to a bursty traffic allocation device, where the statistical data is used to characterize an operating state of the service node and/or the one or more physical machines in the service node.

S23: Receiving a resource scheduling task sent by the bursty traffic allocation device, where the resource scheduling task includes a to-be-expanded resource amount and an identity of a to-be-expanded physical machine.

S25: Acquiring a target resource, at the to-be-expanded resource amount, from a redundant resources pool, initializing one or more target virtual machines in the to-be-expanded physical machine, and allocating the target resource to the one or more target virtual machines.

S27: Feeding back a resource expansion message to the bursty traffic allocation device, to allow the bursty traffic allocation device to pull bursty traffic of a target service to a physical machine in which the one or more target virtual machines are located, where the resource expansion message indicates that the target resource has been allocated to the one or more target virtual machines.

In one implementation, after allocating the target resource to the one or more target virtual machines, the method further includes:

binding the target resource to a service processed in the one or more target virtual machines, to allow the target resource used by the one or more target virtual machines to be isolated from resources used by other virtual machines.

In one implementation, the method further includes:
after processing of the bursty traffic of the target service is completed by the one or more target virtual machines, deactivating the one or more target virtual machines and releasing the target resource.

In one implementation, if the resource scheduling task cannot be completed, the method further includes:
feeding back a notification message indicating a task execution failure to the bursty traffic allocation device, and receiving a resource scheduling task regenerated by the bursty traffic allocation device;
responsive to the regenerated resource scheduling task, expanding the one or more target virtual machines according to remaining resources in a physical machine in which the one or more target virtual machines are located.

In one implementation, if an amount of the remaining resources in the physical machine in which the one or more target virtual machines are located is less than the to-be-expanded resource amount of the one or more target virtual machines, the method further includes:
receiving a new resource scheduling task generated by the bursty traffic allocation device, and responsive to the new resource scheduling task, determining a target physical machine in the service node, where the resource amount currently remaining in the target physical machine is greater than or equal to the to-be-expanded resource amount of the one or more target virtual machines; and
creating one or more virtual machines in the target physical machine, and forwarding a service to be processed by the one or more target virtual machines to the one or more virtual machines created in the target physical machine.

In one implementation, a resource amount in a redundant resources pool is shared by at least two service nodes, where the at least two service nodes are configured to operate a plurality of types of service, and among the plurality of types of service, there exist at least two types of service with a bursty condition occurring at different time nodes.

The specific implementation process of the above implementations may refer to the descriptions provided in Embodiment 1, details of which will not be repeated again here.

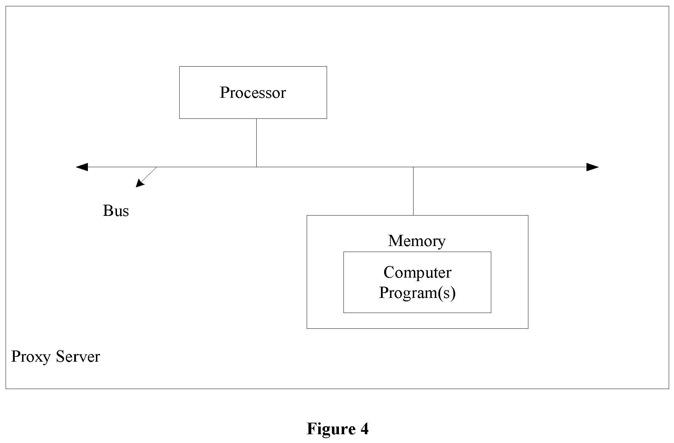

Referring to FIG. 4, the present disclosure further provides a proxy server. The proxy server includes a memory and a processor, where the memory is configured to store the computer programs that, when executed by the processor, may implement the above-described bursty traffic allocation methods applied to a proxy server.

As can be seen from the above, in the technical solutions provided by the present disclosure, a proxy server may be deployed in each service node. The proxy node may communicate with a bursty traffic allocation device. The proxy server may collect, in real time, statistical data of the service node and each physical machine in the service node. The statistical data may include, for example, bandwidth data, machine load, CPU usage data, memory usage data, etc. The statistical data may be fed back to the bursty traffic allocation device by the proxy server. The bursty traffic allocation device may include a data analysis unit, a scheduling decision unit, and a strategy issuing unit. Here, the data analysis unit may evaluate, based on the statistical data, whether the service node and the physical machine(s) are currently in a healthy operating state, and may assess the health level of the service node and the physical machine(s). Afterwards, the data analysis unit may further automatically analyze the current service quality of a target service, to determine, according to the service quality, whether there exists a bursty condition in the target service. Once there exists a bursty condition in the target service, the scheduling decision unit may generate a resource scheduling task matching the service node according to the severity of the bursty condition and the health level of the service node and the physical machine(s). The resource scheduling task may be used to expand the service node, to allow the service node to have a capacity to handle the bursty service traffic. The resource scheduling task may be issued to the proxy server. Responsive to the resource scheduling task, the proxy server may obtain a certain amount of target resource from the redundant resources pool, initialize target virtual machine(s) on a to-be-expanded physical machine in the service node, and at the same time, may allocate the target resource to the target virtual machine(s). After the proxy server has deployed the target virtual machine(s) and allocated the corresponding target resource, the proxy server may feed back a resource expansion message to the bursty traffic allocation device, where the resource expansion message may indicate that the resource has been deployed. Thereafter, the bursty traffic allocation device may pull the bursty traffic of the target service, through a bandwidth pulling module, to a physical machine in which the target virtual machine(s) is located. The bursty service traffic may be then processed by the target virtual machine(s) subsequently. Further, the above redundant resources pool may be shared by a plurality of service nodes, and multiple services operating in the plurality of service nodes may have bursty conditions occurred alternatively in time, which results in a small resource amount required in the redundant resources pool. In addition, the redundant resources may consistently play a role in handling bursty traffic at different time nodes, thereby improving the utilization rate of the redundant resources. As can be seen from the above, when a service has a bursty condition, through the real-time communication between a proxy server and the bursty traffic allocation device, the capacity of a service node may be expanded in time to deal with the bursty service traffic. This may make full use of the resources in the network, thereby improving the efficiency in handling bursty traffic.

Through the foregoing description of the embodiments, it is clear to those skilled in the art that each embodiment may be implemented by means of software plus a necessary general hardware platform, and apparently, by means of hardware as well. Based on this understanding, the technical solutions, or essentially the parts that contribute to the existing technologies, may be embodied in the form of a software product. The computer software product may be stored in a computer-readable storage medium, such as a ROM/RAM, a magnetic disc, an optical disc, etc., and include a series of instructions that cause a computing device (which may be a personal computer, a server, or a network device, etc.) to implement each embodiment or methods described in certain parts of each embodiment.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. A bursty traffic allocation method, comprising:
receiving statistical data sent by a proxy server deployed in a service node, wherein the statistical data is used to characterize an operating state of the service node and/or one or more physical machines in the service node;
determining whether there is a bursty condition in a target service, and if there is a bursty condition in the target service, generating a resource scheduling task matching the service node based on the statistical data;
feeding back the resource scheduling task to the proxy server, to allow the proxy server to expand a physical machine in the service node according to a resource amount specified in the resource scheduling task; and
receiving a resource expansion message fed back by the proxy server for the resource scheduling task, and pulling bursty traffic of the target service to a physical machine specified in the resource expansion message.

2. The method according to claim 1, wherein determining whether there is a bursty condition in the target service further includes:
acquiring historical bandwidth data of the target service, and fitting a bandwidth fluctuation curve of the target service according to the historical bandwidth data;
predicting a bursty bandwidth threshold of the target service based on the bandwidth fluctuation curve; and
comparing current bandwidth data of the target service with the bursty bandwidth threshold, and determining that there is a bursty condition in the target service if a bandwidth value represented by the current bandwidth data of the target service is greater than or equal to the bursty bandwidth threshold.

3. The method according to claim 1, wherein the statistical data includes at least hardware metric data and bandwidth data of the one or more physical machines and current bandwidth data of the service node, and generating the resource scheduling task matching the service node based on the statistical data further includes:
inputting hardware metric data and bandwidth data of a physical machine into a predefined evaluation model, and taking a result output by the predefined evaluation model as a state parameter of the physical machine;
determining a state parameter of the service node according to the current bandwidth data of the service node; and
generating the resource scheduling task matching the service node according to state parameters of the one or more physical machines and the state parameter of the service node.

4. The method according to claim 3, wherein determining the state parameter of the service node according to the current bandwidth data of the service node further includes:
identifying a bandwidth upper limit of the service node, taking a multiplicative value of the bandwidth upper limit and a first determination ratio as a first determination threshold, and taking a multiplicative value of the bandwidth upper limit and a second determination ratio as a second determination threshold, wherein the first determination ratio is greater than the second determination ratio;
if a bandwidth value represented by the current bandwidth data of the service node is greater than the first determination threshold, taking a parameter denoting an unhealthy level as the state parameter of the service node;
if the bandwidth value represented by the current bandwidth data of the service node is less than or equal to the first determination threshold, but greater than the second determination threshold, taking a parameter denoting a sub-healthy level as the state parameter of the service node; and
if the bandwidth value represented by the current bandwidth data of the service node is less than or equal to the second determination threshold, taking a parameter denoting a healthy level as the state parameter of the service node.

5. The method according to claim 3, wherein generating the resource scheduling task matching the service node according to the state parameters of the one or more physical machines and the state parameter of the service node further includes:
determine a to-be-allocated resource amount of the target service;
according to the state parameter of the service node, determining a target resource amount from the to-be-allocated resource amount of the target service; and
allocating the target resource amount among each of the one or more physical machines according to the state parameters of the one or more physical machines in the service node, and generating a corresponding resource scheduling task according to an amount of resource allocated to each of the one or more physical machines.

6. The method according to claim 5, wherein a resource amount in a redundant resources pool is shared by at least two service nodes, the at least two service nodes being configured to operate a plurality of types of service, and among the plurality of types of service, there exists at least two types of service with a bursty condition occurring at different time nodes.

7. The method according to claim 1, wherein each of the one or more physical machines is deployed with one or more virtual machines for executing services, and, after feeding back the resource scheduling task to the proxy server, the method further includes:
if a notification message of failing to expand one or more target virtual machines fed back by the proxy server is received, determining, based on the statistical data, whether there are remaining resources in a physical machine in which the one or more target virtual machines are located; and
if a resource amount of the remaining resources reaches a to-be-expanded resource amount of the one or more target virtual machines, regenerating a resource scheduling task directed towards the one or more target virtual machines, wherein the regenerated resource scheduling task is used to expand the one or more target virtual machines according to the remaining resources in the physical machine in which the one or more target virtual machines are located.

8. The method according to claim 7, further comprising:
if the resource amount of the remaining resources is less than the to-be-expanded resource amount of the one or more target virtual machines, determining a target physical machine, wherein a resource amount of current remaining sources in the target physical machine is greater than or equal to the to-be-expanded resource amount of the one or more target virtual machines; and
generating a new resource scheduling task for the target physical machine, wherein the new resource scheduling task is used to create one or more virtual machines in the target physical machine, and a resource amount used by the created one or more virtual machines reaches the to-be-expanded resource amount of the one or more target virtual machines.

9. A bursty traffic allocation device, comprising a data analysis unit, a scheduling decision unit, and a strategy issuing unit, wherein:
the data analysis unit is configured to receive statistical data sent by a proxy server deployed in a service node, wherein the statistical data is used to characterize an operating state of the service node and/or one or more physical machines in the service node, and determine whether there is a bursty condition in a target service;
the scheduling decision unit is configured to, when there is a bursty condition in the target service, generate a resource scheduling task matching the service node based on the statistical data, and feed back the resource scheduling task to the proxy server, to allow the proxy server to expand a physical machine in the service node according to a resource amount specified in the resource scheduling task; and
the strategy issuing unit is configured to receive a resource expansion message fed back by the proxy server for the resource scheduling task, generate a bandwidth pulling task according to the resource expansion message, and issue the bandwidth pulling task to a bandwidth pulling module, to allow the bandwidth pulling module to pull bursty traffic of the target service to a physical machine specified in the resource expansion message.

10. A bursty traffic allocation method, the method being applied to a proxy server deployed in a service node, and the method comprising:
collecting, in real-time, statistical data of the service node and/or one or more physical machines in the service node, and sending the statistical data to a bursty traffic allocation device, wherein the statistical data is used to characterize an operating state of the service node and/or the one or more physical machines in the service node;
receiving a resource scheduling task sent by the bursty traffic allocation device, wherein the resource scheduling task includes a to-be-expanded resource amount and an identity of a to-be-expanded physical machine;
acquiring a target resource, at the to-be-expanded resource amount, from a redundant resources pool, initializing one or more target virtual machines in the to-be-expanded physical machine, and allocating the target resource to the one or more target virtual machines; and
feeding back a resource expansion message to the bursty traffic allocation device, to allow the bursty traffic allocation device to pull bursty traffic of a target service to the physical machine in which the one or more target virtual machines are located, wherein the resource expansion message indicates that the target resource has been allocated to the one or more target virtual machines.

11. The method according to claim 10, wherein, after allocating the target resource to the one or more target virtual machines, the method further includes:
binding the target resource to a service processed in the one or more target virtual machines, to allow the target resource used by the one or more target virtual machines to be isolated from resources used by other virtual machines.

12. The method according to claim 10, further comprising:
after processing of bursty traffic of the target service is completed by the one or more target virtual machines, deactivating the one or more target virtual machines and releasing the target resource.

13. The method according to claim 10, wherein, if the resource scheduling task cannot be completed, the method further includes:
feeding back a notification message indicating a task execution failure to the bursty traffic allocation device, and receiving a resource scheduling task regenerated by the bursty traffic allocation device; and
responsive to the regenerated resource scheduling task, expanding the one or more target virtual machines according to remaining resources in a physical machine in which the one or more target virtual machines are located.

14. The method according to claim 13, wherein, if an amount of the remaining resources in the physical machine in which the one or more target virtual machines are located is less than a to-be-expanded resource amount of the one or more target virtual machines, the method further includes:
receiving a new resource scheduling task generated by the bursty traffic allocation device, and responsive to the new resource scheduling task, determining a target physical machine in the service node, wherein a resource amount currently remaining in the target physical machine is greater than or equal to the to-be-expanded resource amount of the one or more target virtual machines; and
creating one or more virtual machines in the target physical machine, and forwarding a service, to be processed by the one or more target virtual machines, to the one or more virtual machines created in the target physical machine.

15. The method according to claim 10, wherein a resource amount in a redundant resources pool is shared by at least two service nodes, the at least two service nodes being configured to operate a plurality of types of service, and among the plurality of types of service, there exists at least two types of service with a bursty condition occurring at different time nodes.

16. A proxy server, comprising a memory and a processor, wherein the memory is configured to store computer programs that, when executed by the processor, implement the bursty traffic allocation method according to any one of claims 10-15.
